# EUROPÄISCHE PATENTSCHRIFT

(11) **EP 2 420 804 B1**
(45) Veröffentlichungstag und Bekanntmachung des Hinweises auf die Patenterteilung: **28.08.2019**
(21) Anmeldenummer: 11006525.7
(22) Anmeldetag: 09.08.2011
(51) Int. Cl.: G01D 5/244, G01D 5/14, F15B 15/28, G01D 3/02

(54) **Messeinrichtung und Verfahren zur Erfassung und Verarbeitung einer Position eines Messglieds**
Measuring device and method for recording and processing a position of a measuring element
Dispositif de mesure et procédé pour l'établissement et le traitement d'une position d'un élément de mesure

(30) Priorität: 20.08.2010 DE 102010034994
(43) Veröffentlichungstag der Anmeldung: 22.02.2012
(73) Patentinhaber: Festo AG & Co. KG, 73734 Esslingen (DE)
(72) Erfinder: Heineck, Torsten, 73770 Denkendorf (DE); Kiessling, Albert, Dr., 71263 Weil der Stadt (DE); Rieder, Wolfgang, 73728 Esslingen (DE)
(74) Vertreter: Patentanwälte Magenbauer & Kollegen Partnerschaft mbB

(56) Entgegenhaltungen:
- DE-A1- 10 243 412
- DE-A1-102005 005 011
- US-A- 5 621 398
- US-B1- 6 556 153

## Beschreibung

Die Erfindung betrifft eine Messeinrichtung mit einem Messgehäuse und einem beweglich im Messgehäuse aufgenommenen Messglied sowie mit einer Sensoreinrichtung zur Erfassung einer Position des Messglieds relativ zum Messgehäuse, wobei die Sensoreinrichtung wenigstens ein zur Bereitstellung eines analogen Sensorsignals in Abhängigkeit von der Position des Messglieds ausgebildetes Sensormittel sowie Schaltungsmittel zur Analog-Digital-Wandlung des Sensorsignals und Verarbeitungsmittel zur Verarbeitung des Sensorsignals und Buskommunikationsmittel zur bidirektionalen digitalen Datenübertragung zwischen der Sensoreinrichtung und einer Steuereinrichtung umfasst. Ferner betrifft die Erfindung ein Verfahren zur Erfassung und Verarbeitung einer Position eines Messglieds.

Aus der EP 1 640 618 A1 ist ein Positionssensor für einen Fluidzylinder mit wenigstens einem magnetischen oder induktiven Sensor bekannt, das zur Bestimmung von wenigstens einer Position eines Kolbens ausgebildet ist und das Verstellmittel umfasst, mittels derer wenigstens zwei Schaltpunkte des Sensorsystems einstellbar sind.

Die EP 1203933 A1 offenbart eine Sensoranordnung zur Erfassung wenigstens eines Messwerts, bei der ein sensitives Element mit einem Eingangs/Ausgangsport verbunden ist und über eine Sensorelektronik sowie eine Speicheranordnung verfügt. Der Eingangs/Ausgangsport ist mit einer wenigstens drei Leitungen aufweisenden Leitungsanordnung mit einem externen elektrischen oder elektronischen Gerät verbindbar, wobei zwei Leitungen als Spannungsversorgungsleitungen und wenigstens eine dritte Leitung als Sensorsignalleitung zur Übertragung von Sensorsignalen zum elektrischen oder elektronischen Gerät ausgebildet sind. Mittels einer externen, mit der wenigstens einen Sensorsignalleitung verbindbaren Parametriereinrichtung sind Parametriersignale der Sensorelektronik zuführbar, um die Sensoranordnung durch Speicherung von Parametrierwerten zu parametrieren.

Die DE 10025662 A1 offenbart einen Näherungssensor mit einem Oszillator, welcher durch einen von außen heranführbaren Gegenstand beeinflussbar ist, sowie mit Auswerteeinrichtungen zur Erzeugung eines analogen Ausgangssignals in Abhängigkeit eines Messabstands zwischen Gegenstand und Oszillator und mit einem Ausgangsanschluss, an welchem das analoge Ausgangssignal abgreifbar ist. Dabei ist in den Sensor eine Schaltpunkt-Auswerteeinheit integriert, durch welche ein digitales Ausgangssignal bereitstellbar ist, das die Information enthält, ob ein detektierter Messabstand oberhalb oder unterhalb eines vorgegebenen Schaltpunkts liegt. Zudem ist ein Ausgangsanschluss für das digitale Ausgangssignal vorgesehen.

Aus der DE 102006008157 A1 ist ein Kolben-Zylindersystem mit einem magnetischen Sensor zur Bestimmung von Positionen eines Gebermagneten entlang einer Strecke mit wenigstens zwei Sensorelementen bekannt, wobei beide Sensorelemente wenigstens eine Komponente eines Magnetfeldes des Gebermagneten erfassen. Ergänzend ist eine mit dem Sensorelement verbundene Auswerteeinheit zur Erzeugung wenigstens eines einer gewünschten Magnetposition entsprechenden Schaltsignals vorgesehen. Dabei erfasst jedes Sensorelement die gesamte Strecke, wobei für jede gewünschte Magnetposition eine über die Strecke eindeutige Signalwertegruppe der beiden Sensorelemente zur Erzeugung des Schaltsignals in der Auswerteeinheit vorliegt.

Die DE 102005005011 A1 offenbart einen Hydraulikzylinder zur Betätigung eines Cabriolet-Verdeckes mit einem Gehäuse und einem in dem Gehäuse verschiebbaren und mit einem Betätigungselement verbundenen Kolben wobei der Hydraulikzylinder eine Einrichtung zur Erfassung der Stellung des Betätigungselements umfasst, welche ihrerseits aufweist: einen mit dem Kolben mitbewegten ersten Magneten und eine an der Außenseite des Gehäuses angeordnete Potentiometereinrichtung, die wenigstens eine Widerstandsbahn und einen parallel zur Bewegungsrichtung des Kolbens verschiebbaren Schleifabnehmer, der leitend mit der Widerstandsbahn in Kontakt steht sowie wenigstens einen an dem Schleifabnehmer angeordneten zweiten Magneten umfasst, welcher mit dem ersten Magneten derart zusammenarbeitet, dass der Schleifabnehmer einer Bewegung des Kolbens folgt.

Aus der DE 10243412 A1 ist eine Schaltungsanordnung für einen Wegsensor, welcher zwei parallel zu einer Bewegungsachse angeordnete Magnetfeldsensoren umfasst, deren Sensorspannungen zu einem Ausgangssignal verknüpft werden, bekannt. Dabei besitzt die Schaltungsanordnung einen zweipoligen Betriebsspannungsanschluss, einen Schaltausgang und einen Sensorausgang sowie einen Mikroprozessor, der in einem Messmodus von jedem Sensor die Sensorspannung an einem Analog/Digital-Wandlereingang empfängt, diese zum Ausgangssignal verknüpft und ein Sensorsignal an den Sensorausgang und ein Schaltsignal an den Schaltausgang liefert und in einem Programmiermodus über den Schaltausgang und/oder den Sensorausgang eine bidirektionale Kommunikationsverbindung mit einem externen Servicegerät aufbaut, um Daten auszutauschen. Ferner weist die Schaltungsanordnung ein Umschaltelement auf, welches das Spannungspotential am Sensorausgang und/oder am Schaltausgang überwacht und beim Vorliegen eines vom externen Servicegerät eingeprägten Umschaltpotentials ein Umschaltsignal an einen Betriebsartwahleingang des Mikroprozessors abgibt, welches den Mikroprozessor vom Messmodus in den Programmiermodus versetzt und ein Speicherelement, in welchem Konfigurationsdaten und ggf. Programmbefehle gespeichert sind, auf.

Aus der DE 10013196 A1 ist eine Positionserfassungseinrichtung mit einer Sensoranordnung zur Erzeugung wenigstens eines Sensorsignals in Abhängigkeit eines sich vorbeibewegenden Körpers bekannt, wobei sich das wenigstens eine Sensorsignal bei der Vorbeibewegung kontinuierlich verändert, mit einer das wenigstens eine Sensorsignal mit wenigstens einem Referenzwert vergleichenden Komparatoranordnung, wobei Steuermittel zur elektronischen Justierung der Sensoranordnung durch Veränderung des Referenzwerts vorgesehen sind und wobei das Ausgangssignal der Komparatoranordnung das Positionssignal zur Erfassung einer Relativposition von Körper und Sensoranordnung bildet.

Die US 5,621,398 A beschreibt einen programmierbaren Schalter mit einem Gehäuse. Ein Sensor ist mit dem Gehäuse verbunden. Der Sensor erfasste eine messbare physikalische Eigenschaft eines abgetasteten Elements benachbart zum Gehäuse und erzeugt ein elektrisches Signal, das die gemessenen physikalischen Eigenschaften repräsentiert. Eine Logik-Schaltung ist in dem Gehäuse angeordnet und empfängt das elektrische Signal. Die Logik-Schaltung umfasst einen Speicher zur Speicherung eines Referenzwertes und einen Controller für den Vergleich des Referenzwerts mit der gemessenen physikalischen Eigenschaft, um den Status der erfassten physikalischen Eigenschaften zu bestimmen. Eine Eingangsschaltung ist operativ mit der Logik-Schaltung zur selektiven Veränderung der gespeicherten Referenzwerte des Schalters verbunden. Ein Ausgangsschaltkreis ist operativ mit der Logikschaltung verbunden, um den Status der erfassten Eigenschaft extern anzeigen zu können.

Aus der US 6,556,153 B1 sind ein System und ein Verfahren zur Verbesserung der Auflösung für ein Positionsmeßsystem bekannt, bei dem ein oder mehrere Signale verarbeitet werden, die von einer Relativbewegung zwischen zwei Körpern abhängig sind. Hierbei erfolgt eine Interpolation des oder der Signale anhand einer Messwerttabelle, in der experimentell ermittelte Beziehungen zwischen Messwerten und Positionen abgelegt sind.

Die Aufgabe der Erfindung besteht darin, eine Messeinrichtung sowie ein Verfahren zur Erfassung und Verarbeitung einer Position eines Messglieds bereitzustellen, die eine zuverlässige und variabel anpassbare Ermittlung der Position des Messglieds ermöglichen.

Diese Aufgabe wird für eine Messeinrichtung der eingangs genannten Art mit den Merkmalen des Anspruchs 1 gelöst.

Hierbei ist vorgesehen, dass die Verarbeitungsmittel für eine programmierbare logische Verknüpfung von wenigstens zwei in zeitlicher Abfolge nacheinander ermittelten Beträgen von Sensorsignalen sowie für eine Bereitstellung eines Verknüpfungsergebnisses und des analogen Sensorsignals in digitalisierter Codierung, insbesondere mit einer Codierung, die wenigstens 2 Bit umfasst, an die Buskommunikationsmittel ausgebildet sind.

Somit wird erfindungsgemäß parallel oder seriell zu dem analogen Sensorsignal in digitalisierter Codierung ein Ergebnis einer logischen Verknüpfung von wenigstens zwei in zeitlicher Abfolge nacheinander ermittelten Beträgen des Sensorsignals an die Buskommunikationsmittel bereitgestellt. Das Ergebnis der logischen Verknüpfung kann beispielsweise ein digital codiertes Statussignal sein, das von der Steuereinrichtung unmittelbar weiterverarbeitet werden kann, beispielsweise ein Signal über das Erreichen einer vorgebbaren Position des Messglieds relativ zum Messgehäuse. Ein derartiges Statussignal ist beispielsweis dann von Interesse, wenn das Messglied einem linear- oder schwenkbeweglichen Stellglied zugeordnet ist, dessen Position von der Steuereinrichtung gesteuert oder geregelt werden soll. Bei dem Stellglied kann es sich beispielsweise um einen Läufer eines elektrisch betreibbaren Linearmotors oder um einen Arbeitskolben eines fluidischen Antriebs oder um einen Auftriebskörper in einer Durchflussmesseinrichtung handeln.

Bei dem Sensorsignal kann es sich beispielsweise um eine elektrische Spannung oder einen elektrischen Strom handeln. Der Wert dieser elektrischen Größe steht in Abhängigkeit zu dem Wert der zu ermittelnden Messgröße, beispielsweise einer Feldstärke eines Magnetfelds, die von dem Sensormittel gemessen wird. Bei dem Sensormittel kann es sich beispielsweise um einen Hall-Sensor, um einen Sensor auf Basis des magnetresistiven Effekts (MR-Sensor) oder um einen induktiven Näherungssensor handeln.

Die von den Sensormitteln bereitgestellte analoge elektrische Größe ist vorzugsweise zumindest im Wesentlichen proportional zu einer Distanz zwischen dem Messglied und dem Sensormittel. Der Wert dieser elektrischen Größe wird in den Schaltungsmitteln in ein internes, digital codiertes Zwischensignal gewandelt, das an die Verarbeitungsmittel bereitgestellt wird. In den Verarbeitungsmitteln kann vor der Durchführung der logischen Verknüpfung eine weitere Verarbeitung des Zwischensignals vorgesehen werden. Beispielsweise wird das Zwischensignal mit einer in den Verarbeitungsmitteln gespeicherten Wertetabelle in Beziehung gesetzt. Diese Wertetabelle kann beispielsweise Korrekturwerte enthalten. Hierdurch kann das gegebenenfalls nicht oder nur bereichsweise zur Bewegung des Messglieds proportionale analoge Signal beispielsweise linearisiert werden, um am Ausgang der Verarbeitungsmittel ein zur Position des Messglieds gegenüber dem Messgehäuse proportionales Ausgangssignal an die Buskommunikationsmittel bereitstellen zu können.

Durch die logische Verknüpfung von wenigstens zwei Beträgen des analogen Sensorsignals, die in zeitlicher Abfolge nacheinander ermittelt wurden, kann beispielsweise überprüft werden, ob das Messglied der Messeinrichtung eine vorgebbare Stellung erreicht hat und ob diese Stellung auch in einer vorgegebenen Weise erreicht wurde. Zur logischen Verknüpfung der Beträge des Sensorsignals können exemplarisch boolesche Operatoren wie "UND, ODER, NICHT, XOR" eingesetzt werden. Das Verknüpfungsergebnis wird vorzugsweise als digitales Schaltsignal an die Buskommunikationsmittel bereitgestellt.

Aufgrund der Bereitstellung des Sensorsignals als Analogsignal sowie aufgrund der Verarbeitung des analogen Sensorsignals als digital codiertes Analogsignal in den Verarbeitungsmitteln ist es möglich, unterschiedliche Signalpegel des analogen Sensorsignals als unterschiedliche Schaltpunkte zu interpretieren. Vorzugsweise ist diese Verarbeitung des analogen Sensorsignals frei programmierbar. Somit kann ein mechanisches Verschieben des Sensormittels zur Einstellung wenigstens eines mit der Position des Messglieds korrelierten Schaltpunkts entfallen. Vielmehr kann das Sensormittel an einer vorgebbaren Position am Messgehäuse ortsfest angeordnet werden. Die Einstellung des wenigstens einen Schaltpunkts erfolgt dann durch geeignete Programmierung oder Parametrierung, beispielsweise durch Vorgabe einer Schwelle, die mit dem Wert des Sensorsignals verglichen wird, um ein Erreichen des Schaltpunkts durch das Messglied zu kennzeichnen. Zudem können durch die Auswertung des digital codierten Zwischensignals mehrere örtlich eng beieinanderliegende Positionen des Messglieds aufgelöst und in entsprechende Schaltpunkte umgesetzt werden, ohne dass hierzu mehrere Sensormittel erforderlich wären. Vielmehr wird die Stellung des Messglieds durch das Sensormittel erfasst, solange sich das Stellmittel in dem technisch bedingten Erfassungsbereich des Sensormittels aufhält. Durch die Verarbeitung des digital codierten Analogsignals kann in den Verarbeitungsmitteln oder in der Steuereinrichtung die Zuordnung des vorliegenden Signalpegels des Sensorsignals zu den vorgegebenen Schaltpunkten erfolgen.

Das von den Verarbeitungsmitteln bereitgestellte Ausgangssignal ist ein mit wenigstens zwei Bit codiertes digitales Analogsignal, so dass wenigstens vier unterschiedliche Signalpegel über die Buskommunikationsmittel an eine Steuereinrichtung ausgegeben werden können. Der Vorteil bei der digitalen Übertragung des analogen Sensorsignals als digital codiertes Analogsignal liegt darin, dass die Störsicherheit für die Signalübertragung erhöht wird. Somit ist es möglich, das Sensorsignal über eine kostengünstige Datenleitung über eine Distanz von mehreren Metern zu übertragen, ohne dass äußere Störeinflüsse zu einer Verschlechterung des übertragenen Sensorsignals führen. Die Auswertung des Sensorsignals erfolgt beispielsweise in der Steuereinrichtung.

Vorzugsweise sind die Buskommunikationsmittel für eine Punkt-zu-Punkt-Kommunikation, wie dies beispielsweise bei I/O-Link vorgesehen ist, oder als Feldbusknoten, beispielsweise für eine Buskommunikation nach dem Profibus-Protokoll, ausgebildet. Alternativ können die Buskommunikationsmittel auch für eine Kommunikation nach einem anderen Busprotokoll wie beispielsweise EtherCAT, CanOpen oder Industrial-Ethernet ausgebildet sein. Die interne Codierung des Zwischensignals muss nicht mit der Codierung des Ausgangssignals übereinstimmen. Vorzugsweise ist das Zwischensignal mit einer höheren Bitzahl, beispielsweise 16 Bit codiert, während das Ausgangssignal beispielsweise mit 8 Bit codiert ist. Hierdurch kann zunächst die interne Verarbeitung des ursprünglich analogen Sensorsignals mit einer hohen Auflösung vorgenommen werden, wobei der bei der Analog-Digital-Wandlung auftretende Informationsverlust gering gehalten wird. Anschließend findet die Wandlung des verarbeiteten digital codierten Zwischensignals in das digital codierte Ausgangssignal statt. Das Ausgangssignal, das zur Kommunikation mit der Steuereinrichtung vorgesehen ist, weist gegenüber dem Zwischensignal exemplarisch eine geringere Auflösung auf, um die Datenübertragung an die Steuereinrichtung zu vereinfachen.

Vorteilhafte Weiterbildungen der Erfindung sind in den Unteransprüchen angegeben.

Bei einer Weiterbildung der Erfindung ist vorgesehen, dass die Verarbeitungsmittel für eine Zwischenspeicherung wenigstens eines Werts des Sensorsignals ausgebildet sind. Mit der Zwischenspeicherung kann ein zeitlich vorgehender Wert des Sensorsignals mit einem zeitlich nachfolgenden Wert des Sensorsignals logisch verknüpft werden. Dies ist insbesondere dann von Vorteil, wenn die Messeinrichtung lediglich ein einziges Sensormittel umfasst, das seinerseits zu einem gegebenen Zeitpunkt genau ein Sensorsignal erzeugt.

Zweckmäßig ist es, wenn die Sensoreinrichtung eine Speicheranordnung umfasst, in der Korrekturwerte, insbesondere Korrekturwerte für eine Sensorhysterese und/oder Korrekturwerte für unterschiedliche Schaltwege bei unterschiedlich ausgebildeten Messgehäusen, gespeichert sind, wobei die Korrekturwerte von der Speicheranordnung an die Verarbeitungsmittel bereitstellbar sind, um eine Korrektur des analogen Sensorsignals zu ermöglichen. Mit Hilfe der Korrekturwerte kann bei der Verarbeitung des Sensorsignals in den Verarbeitungsmitteln eine vorteilhafte Anpassung des Ausgangssignals an die tatsächlichen Gegebenheiten, insbesondere im Hinblick auf eine eventuell vorhandene Hysterese des Sensormittels und/oder im Hinblick auf die Schaltwege in Abhängigkeit von konstruktiv unterschiedlich ausgebildeten Messgehäusen, vorgenommen werden. Hierdurch wird beispielsweise die gewünschte Linearisierung des Sensorsignals verbessert, so dass in der Steuereinrichtung keine weitere Korrektur des Sensorsignals erforderlich ist. Die Korrekturwerte können entweder fest in der Speicheranordnung abgelegt sein oder durch externe Programmierung in die Speicheranordnung eingeschrieben werden. Die Sensormittel können dadurch an den jeweiligen Messgehäusen jeweils an einem mechanisch vorteilhaften Ort angebracht werden. Anhand der Korrekturwerte, die vom Benutzer entsprechend dem verwendeten Messgehäuse ausgewählt werden, wird anschließend die Positionsermittlung für das Messglied gegenüber dem jeweiligen Messgehäuse anhand der zugeordneten, gespeicherten Korrekturwerte abgeglichen.

Bei einer Weiterbildung der Erfindung ist vorgesehen, dass die, insbesondere als I/O-Link-Schnittstelle ausgebildeten, Buskommunikationsmittel für einen Empfang von Steuerbefehlen, insbesondere Parametrierbefehlen, von einer Steuereinrichtung sowie zur Weiterleitung der Steuerbefehle an die Verarbeitungsmittel und/oder an die Speicheranordnung ausgebildet sind. Somit ermöglichen die Buskommunikationsmittel im bidirektionalen Datenaustausch, insbesondere gemäß dem I/O-Link-Protokoll, eine Einstellung oder Parametrierung der Verarbeitungsmittel durch die Steuereinrichtung, bei der es sich beispielsweise um eine speicherprogrammierbare Steuerung (SPS) handeln kann. Bei dem Buskommunikationsmittel kann es sich exemplarisch um eine Kommunikationsschnittstelle zur Punkt-zu-Punkt-Kommunikation mit einem I/O-Link-Mastergerät handeln. Exemplarisch weist das I/O-Link-Mastergerät mehrere Anschlüsse für I/O-Link-Geräte wie die Sensoreinrichtung auf. Zwischen dem I/O-Link-Mastergerät und dem jeweiligen I/O-Link-Gerät ist jeweils eine eigene, vorzugsweise als diskretes, insbesondere als mehradriges, Kabel ausgeführte, Kabelverbindung vorgesehen. Mit Hilfe der Steuerbefehle kann von der Steuereinrichtung Einfluss auf den Verarbeitungsvorgang in den Verarbeitungsmitteln genommen werden. Beispielsweise können von der Steuereinrichtung Parameter wie eine Umgebungstemperatur oder eine Information über die Geometrie des Messgehäuses und den zu berücksichtigenden Korrekturwert bereitgestellt werden, um eine Korrektur des Ausgangssignals und/oder eine Einstellung der in den Auswertemitteln vorzunehmenden logischen Verknüpfung von Beträgen der Sensorsignale zu bewirken. Das I/O-Link-Mastergerät kann seinerseits beispielsweise für eine Kommunikation mit der SPS über Profibus oder über ein Industrial-Ethernet-Busprotokoll ausgebildet sein.

Vorteilhaft ist es, wenn in der Speicheranordnung Verarbeitungsanweisungen, insbesondere logische Verknüpfungsanweisungen, zur Verarbeitung des analogen Sensorsignals hinterlegt sind, die für eine Anpassung des Verarbeitungsvorgangs für das analoge Sensorsignals in den Verarbeitungsmitteln an diese bereitstellbar sind. Bei den gespeicherten Verarbeitungsanweisungen kann es sich beispielsweise um Standartanweisungen handeln, die durch ein geeignetes Steuersignal von der Steuereinrichtung abgerufen werden können und nicht einzeln programmiert werden müssen. Der Funktionsumfang der gespeicherten Verarbeitungsanweisungen kann unterschiedlich ausgebildet sein. Beispielsweise kann eine Verarbeitungsanweisung lediglich eine einzige logische Verknüpfung oder gegebenenfalls eine Abfolge von logischen Verknüpfungen umfassen.

Zweckmäßig ist es, wenn die Speicheranordnung für die Speicherung wenigstens eines programmierbaren, eine relative Position des Messglieds gegenüber dem Messgehäuse kennzeichnenden Positionswerts, der zum Vergleich mit einem aktuellen und/oder mit einem zwischengespeicherten Wert des Sensorsignals in den Verarbeitungsmitteln einsetzbar ist, ausgebildet ist. Dieser Positionswert wird vom Benutzer vorgegeben, entweder durch eine entsprechende Anweisung der Steuereinrichtung, die vom Benutzer programmiert wird oder durch Anfahren einer benutzerdefinierten Position eines Aktors, beispielsweise eines Linearantriebs oder eines Schwenkantriebs sowie nachfolgende Abspeicherung der angefahrenen Position. Somit entspricht der Positionswert einer vom Benutzer definierten Funktionsstellung eines Stellglieds, an dem das Messglied angebracht ist, gegenüber dem Messgehäuse, bei dem es sich beispielsweise um ein Antriebsgehäuse eines linearen oder rotierenden Antriebs handeln kann. Ein derartiger Vorgang zum Abspeichern einer benutzerdefinierten Position wird auch Einlernen oder Teachen genannt. Bei der nachfolgenden Verarbeitung von Beträgen des Sensorwerts kann ein Vergleich der programmierten Position des Messglieds mit der tatsächlichen Position des Messglieds vorgenommen werden. Bei einer Übereinstimmung der beiden Beträge kann ein Schaltsignal von den Verarbeitungsmitteln ausgegeben werden, ergänzend oder alternativ wird eine logische Verknüpfung des Werts mit einem zwischengespeicherten Wert des Sensorsignals vorgenommen.

Erfindungsgemäß sind die Verarbeitungsmittel für wenigstens eine programmierbare logische Verknüpfung von Beträgen des analogen Sensorsignals aus der Funktionsgruppe: Schaltpunktkorrektur, Fensterkomparator, Richtungserkennung, Hysteresekomparator, ODER-Verknüpfung, UND-Verknüpfung, Negation, Zählwerk, Signalverlängerung, ausgebildet. Die wenigstens eine logische Verknüpfung kann beispielsweise in den Speichermitteln abgelegt sein und wird im Bedarfsfall von den Verarbeitungsmitteln abgerufen.

Bei einer Schaltpunktkorrektur wird eine vorgegebene, insbesondere eingelernte, Position des Messglieds gegenüber der am Messgehäuse angebrachten Sensoreinrichtung durch die Verarbeitungsmittel in ein binäres Schaltsignal umgesetzt, das zur weiteren Verwendung an die Steuereinrichtung übertragen werden kann. Beispielsweise kann ein erster Signalpegel des Schaltsignals, bei dem es sich insbesondere um einen High-Pegel handeln kann, dann von den Verarbeitungsmitteln ausgegeben werden, wenn der Wert des Sensorsignals eine vorgebbare Schwelle überschreitet. Ein zweiter Signalpegel des Schaltsignals, bei dem es sich insbesondere um einen Low-Pegel handeln kann, wird von den Verarbeitungsmitteln ausgegeben, wenn der Wert des Sensorsignals die vorgebbare Schwelle unterschreitet. Um Hystereseeffekte bei der Ermittlung der Schaltpunkte zu minimieren, wird die Bewegungsrichtung des Messglieds gegenüber dem Messgehäuse ermittelt und mit berücksichtigt. Hierdurch kann in Kombination mit der vorgebbaren Schwelle eine besonders präzise Ermittlung derjenigen Positionen erfolgen, an denen ein Wechsel zwischen dem Low- und dem High-Pegel des Schaltsignals erfolgt.

Bei einem Fensterkomparator werden zwei räumlich voneinander beabstandete Positionen des Messglieds gegenüber dem Messgehäuse derart miteinander verknüpft, dass ein Schaltpegel für sämtliche Stellungen des Messglieds zwischen diesen beiden Positionen auf einem ersten Signalpegel, beispielsweise einem High-Pegel, liegt. Für Positionen abseits von Stellungen des Messglieds zwischen den beiden festgelegten Positionen liegt der Signalpegel auf einem davon unterscheidbaren zweiten Signalpegel, beispielsweise auf einem Low-Pegel. Die Verarbeitungsmittel können auch derart eingerichtet sein, dass über den Bewegungsweg des Messglieds mehrere Fensterbereiche definiert werden können. Hystereseeigenschaften der Sensoranordnung können bei der Funktion Fensterkomparator mit berücksichtigt werden, beispielsweise in prozentualer Abhängigkeit von der Breite des gewählten Fensters.

Bei einer Richtungserkennung wird durch Verknüpfung des zwischengespeicherten Werts des Sensorsignals und des aktuellen Werts des Sensorsignals eine Bewegungsrichtung des Messglieds relativ zum Messgehäuse ermittelt und als Schaltsignal ausgegeben.

Bei einem Hysteresekomparator wird zunächst durch Verknüpfen des zwischengespeicherten Werts des Sensorsignals und des aktuellen Werts des Sensorsignals die Bewegungsrichtung des Messglieds relativ zum Messgehäuse ermittelt. Anschließend werden anhand der ermittelten Bewegungsrichtung die Hystereseeigenschaften der Sensoreinrichtung kompensiert, die abhängig von der Annäherungsrichtung des Messglieds an die Sensoreinrichtung sind. Hierzu sind in der Speichereinrichtung entsprechende Korrekturwerte für die Hystereseeigenschaften hinterlegt, die von den Verarbeitungsmitteln bei der Bewertung des Werts des Sensorsignals und der Ermittlung des jeweiligen Schaltpunkts herangezogen werden. Die Verarbeitungsmittel können dadurch unabhängig von der Bewegungsrichtung des Messglieds die Position des Messglieds gegenüber dem Messgehäuse sowie zugehörige Schaltpunkte präzise ermitteln.

Bei einer ODER-Verknüpfung wird ein Schaltsignal mit einem High-Pegel ausgegeben, wenn der Wert des aktuellen Sensorsignals oder der Wert eines zwischengespeicherten Sensorsignals eine vorgebbare Schwelle überschreitet. Beispielsweise kann dadurch bei einer hohen Relativgeschwindigkeit des Messglieds gegenüber dem Messgehäuse eine Verlängerung der Zeitdauer erreicht werden, innerhalb derer die Verarbeitungsmittel ein Schaltsignal mit einem bestimmten Pegel ausgeben. Dadurch wird die Erkennung und Auswertung des Schaltsignals in der Steuereinrichtung erleichtert.

Bei einer UND-Verknüpfung wird ein Schaltsignal mit einem High-Pegel ausgegeben, wenn sowohl der Wert des aktuellen Sensorsignals als auch der Wert des zwischengespeicherten Sensorsignals eine vorgebbare Schwelle überschreiten.

Bei einer Negation wird das auszugebende Schaltsignal negiert, beispielsweise wird ein Schaltsignal mit einem High-Pegel ausgegeben, wenn der Wert des aktuellen Sensorsignals eine vorgebbare Schwelle unterschreitet, während ohne Negation in diesem Fall ein Schaltsignal mit einem Low-Pegel auszugeben wäre.

Bei einem Zählwerk findet eine Addition einer Anzahl von jeweils gleichen Zeitabschnitten statt, innerhalb derer das Sensorsignal die vorgebbare Schwelle entweder jeweils unterschritten oder überschritten hat.

Bei einer Signalverlängerung ist vorgesehen, dass in den Verarbeitungsmitteln bei Überschreiten einer vorgebbaren Schwelle durch das Sensorsignal ein Ausgabesignal mit einem ersten Signalpegel erzeugt wird, das über eine, vorzugsweise ebenfalls vorgebbare, Zeitdauer aufrechterhalten wird, auch wenn möglicherweise der Wert des Sensorsignals bereits wieder unter die Schwelle abgefallen ist. Wahlweise kann das Ausgabesignal den ersten Signalpegel beibehalten oder zu einem zweiten Signalpegel wechseln, wenn zum Zeitpunkt des Ablaufs der Zeitdauer das Sensorsignal noch oder gegebenenfalls wieder oberhalb der Schwelle liegt. Durch diese logische Verknüpfung wird auch bei einem raschen Passieren der eingelernten Position durch das Messglied eine ausreichend lange Signalausgabe an die Steuereinrichtung gewährleistet.

Alternativ kann die Zeitdauer auch als unendlich gewählt werden, so dass eine Rücksetzung des Signalpegels des Schaltsignals durch ein externes Signal, beispielsweise von der Steuereinrichtung erfolgen muss. Beispielsweise sendet die Steuereinrichtung ein Rücksetzsignal, sobald das von den Verarbeitungsmitteln bereitgestellte Schaltsignal in der Steuereinrichtung empfangen wurde. Eine derartige logische Verknüpfung wird auch als Speicherung bezeichnet. Eine Speicherung kann auch eingesetzt werden, um ein richtungsabhängiges Schaltsignal zu erzeugen, das ausschließlich in einer von zwei möglichen Bewegungsrichtungen des Messglieds ausgegeben wird. Hierbei wird zunächst eine Bestimmung der Bewegungsrichtung des Messglieds vorgenommen. Eine Ausgabe eines entsprechenden Schaltsignals durch die Auswertemittel erfolgt nur dann, wenn zum Einen die Bewegungsrichtung des Messglieds einer vorgegebenen Bewegungsrichtung entspricht und zweitens das Messglied eine vorgebbare Position passiert hat.

Bevorzugt sind die Schaltungsmittel zur Analog-Digital-Wandlung des Sensorsignals und/oder die Verarbeitungsmittel zur Verarbeitung des Sensorsignals und/oder die Buskommunikationsmittel und/oder die Speicheranordnung in einer Hardware-Funktionseinheit, insbesondere in einem Mikrocontroller, zusammengefasst. Bei der Hardware-Funktionseinheit handelt es sich beispielsweise um einen elektronischen Baustein, der vorzugsweise sämtliche zur Verarbeitung und Weiterleitung des analogen Sensorsignals erforderlichen funktionalen Bestandteile umfasst. Besonders bevorzugt ist die Hardware-Funktionseinheit als Mikrocontroller ausgebildet, bei dem ein Prozessor, ein Speicher, ein Analog-Digital-Wandler und eine Busschnittstelle auf einem einzigen elektronischen Baustein (Chip) verwirklicht sind. Durch die Möglichkeit zur Parametrierung der Verarbeitung des analogen Sensorsignals können unterschiedliche Sensormittel an die Hardware-Funktionseinheit angeschlossen werden, beispielsweise Hall-Sensoren oder Sensoren auf Basis des magnetoresitiven Effekts.

In weiterer Ausgestaltung der Erfindung ist vorgesehen, dass die Verarbeitungsmittel für eine Bereitstellung wenigstens eines digitalen Schaltsignals an die Buskommunikationsmittel ausgebildet sind, wobei das digitale Schaltsignal in den Verarbeitungsmitteln anhand des anlogen Sensorsignals und wenigstens einer Verarbeitungsanweisung und/oder eines Korrekturwerts ermittelbar ist. Mit Hilfe des digitalen Schaltsignals, das auf einen vorgebbaren Low-Pegel und alternativ auf einen vorgebbaren High-Pegel einstellbar ist, kann eine Information, beispielsweise über das Erreichen einer vorgebbaren Position des Messglieds, besonders rasch und mit geringer Datenbandbreite an die Steuereinrichtung bereitgestellt werden. Die Voraussetzungen für die Zustandsänderung des digitalen Schaltsignals können durch Vorgabe von entsprechenden logischen Verarbeitungsanweisungen, insbesondere durch die Steuereinrichtung, eingestellt werden.

Die Aufgabe der Erfindung wird durch ein Verfahren mit den Merkmalen des Anspruchs 9 gelöst. Bei dem Verfahren zur Erfassung einer Position eines Messglieds, das beweglich in einem Messgehäuse einer Messeinrichtung aufgenommen ist und dem eine Sensoreinrichtung zugeordnet ist, die wenigstens ein Sensormittel umfasst, sind die nachfolgend angeführten Schritte vorgesehen: Bereitstellung eines analogen, von der relativen Position des Messglieds gegenüber dem Messgehäuse abhängigen Sensorsignals durch das Sensormittel an Schaltungsmittel, Analog-Digital-Wandlung des analogen Sensorsignals in den Schaltungsmitteln, Bereitstellung des digital codierten Sensorsignals an Verarbeitungsmittel, Zwischenspeicherung eines Werts des analogen Sensorsignals in den Verarbeitungsmitteln, Durchführen einer programmierbaren logischen Verknüpfung des zwischengespeicherten Werts mit einem weiteren, in zeitlicher Abfolge später ermittelten Wert des analogen Sensorsignals in den Verarbeitungsmitteln, Wandlung des digital codierten Sensorsignals in ein digital codiertes Analogsignal, das wenigstens 2 Bit umfasst, in den Verarbeitungsmitteln und Bereitstellung des digital codierten Analogsignals an Buskommunikationsmittel zur bidirektionalen digitalen Datenübertragung zwischen der Sensoreinrichtung und einer Steuereinrichtung.

Bei einer ersten Weiterbildung des Verfahrens werden den Verarbeitungsmitteln Korrekturwerte aus einer Speicheranordnung bereitgestellt werden, um eine zumindest teilweise Kompensation von Hystereseeigenschaften der Sensoranordnung und/oder von unterschiedlichen Schaltwegen der Sensoranordnung aufgrund unterschiedlich ausgebildeter Messgehäuse zu ermöglichen, wobei die Korrekturwerte aus einer Speicheranordnung ausgelesen werden.

Bei einer zweiten Weiterbildung des Verfahrens wird in den Verarbeitungsmitteln ein Vergleich des aktuellen Sensorsignals und/oder des zwischengespeicherten Sensorsignals mit wenigstens einem in der Speicheranordnung gespeicherten, eine relative Position des Messglieds gegenüber dem Messgehäuse kennzeichnenden Positionswerts, vorgenommen wird.

Zweckmäßig ist es, wenn in den Verarbeitungsmitteln unter Einbeziehung des aktuellen und/oder des zwischengespeicherten Sensorsignals wenigstens eine programmierbare logische Verknüpfung aus der Funktionsgruppe: Fensterkomparator, Hysteresekomparator, ODER-Verknüpfung, UND-Verknüpfung, Negation, Zählwerk, Richtungserkennung, Signalverlängerung, ermittelt wird.

Ein vorteilhaftes Ausführungsbeispiel der Erfindung ist in der Zeichnung dargestellt. Hierbei zeigt:
- Figur 1: eine schematische Darstellung einer Messeinrichtung, die mit einer Steuereinrichtung gekoppelt ist und
- Figur 2: eine schematische Schnittdarstellung durch eine an der Messeinrichtung gemäß der Figur 1 angebrachte Sensoreinrichtung.

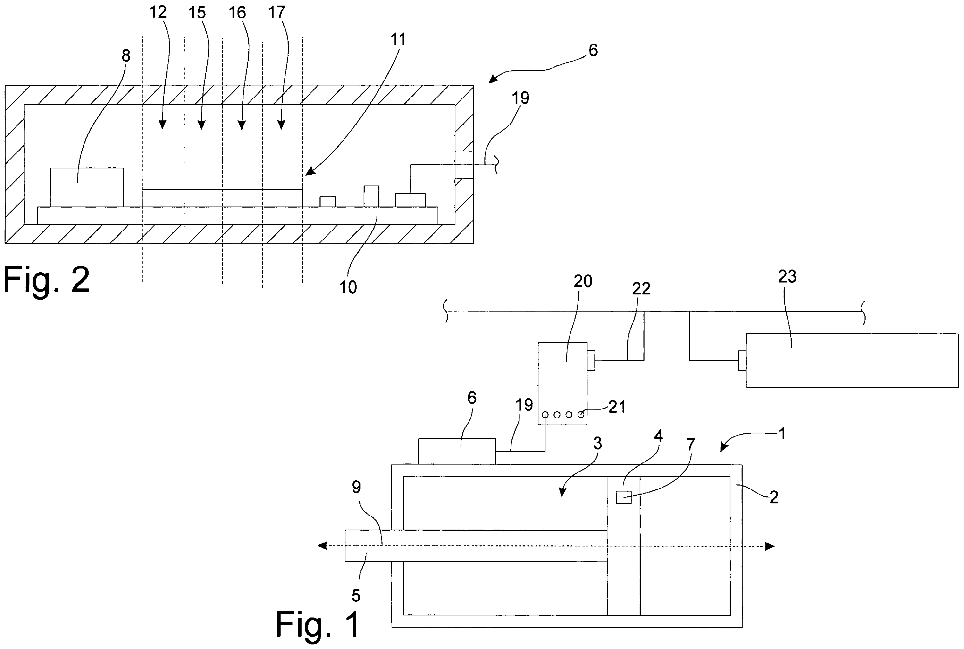

Eine in der Figur 1 schematisch dargestellte Messeinrichtung 1 umfasst ein Messgehäuse 2, in dem ein Messglied 3 schiebebeweglich aufgenommen ist. Das Messglied 3 wird exemplarisch durch einen abdichtend im Messgehäuse 2 aufgenommenen Kolben 4 sowie eine am Kolben 4 befestigte und das Messgehäuse 2 abdichtend durchsetzende Kolbenstange 5 gebildet.

Exemplarisch ist an einer Außenoberfläche des Messgehäuses 2 eine Sensoreinrichtung 6 angebracht, die zur Ermittlung der Position des Messglieds 3 relativ zum Messgehäuse 2 ausgebildet ist. Exemplarisch ist am Kolben 4 ein als Permanentmagnet ausgebildetes Magnetelement 7 angebracht, dessen Magnetfeld von einem nachstehend näher beschriebenen Sensormittel 8 in der Sensoreinrichtung 6 abgetastet wird.

Durch Zufuhr von druckbeaufschlagtem Fluid in eine der beiden von Kolben 4 und Messgehäuse 2 gebildeten Antriebskammern kann eine translatorische Bewegung des Messglieds 3 im Messgehäuse 2 längs der Bewegungsachse 9 bewirkt werden.

Das vom Magnetelement 7 bereitgestellte Magnetfeld wird durch die Sensormittel 8, bei denen es sich beispielsweise um einen Hall-Sensor oder um einen magnetoresistiven Sensor handeln kann, abgetastet und exemplarisch in eine elektrische Spannung gewandelt. Diese elektrische Spannung, die ein analoges Signal darstellt, steht zwar in einer Beziehung zur Position des Messglieds 3 gegenüber dem Sensormittel 8. Diese Beziehung ist jedoch weder zwingend proportional noch zwingend unabhängig von der Geschwindigkeit des Messglieds 3 und/oder von der Geometrie des Messgehäuses 2 und/oder von der Bewegungsrichtung des Messglieds 3.

Das analoge Sensorsignal wird vom Sensormittel 8 über eine schematisch dargestellte Leiterplatte 10 an eine Hardware-Funktionseinheit 11 bereitgestellt, wo eine Weiterverarbeitung vorgesehen ist. Die Hardware-Funktionseinheit 11, die beispielsweise als Mikrocontroller ausgebildet sein kann, umfasst mehrere Funktionsbereiche 12, 15, 16, 17, die in der Figur 2 durch vertikale Linien schematisch voneinander getrennt sind, in der Praxis jedoch in der Architektur der Hardware-Funktionseinheit 11 verteilt angeordnet sein können.

Zunächst findet in einem Analog-Digitalwandlerbereich 12 der Hardware-Funktionseinheit 11 eine Analog-Digital-Wandlung des analogen Sensorsignals in ein digital codiertes Zwischensignal statt. Beispielsweise werden der Wert und gegebenenfalls die Polarität der elektrischen Spannung des analogen Sensorsignals in dem Zwischensignal digital codiert.

Anschließend findet für das Zwischensignal in einem Prozessorbereich 15 der Hardware-Funktionseinheit 11 eine digitale Signalverarbeitung statt. Bei dieser Verarbeitung können Korrekturwerte, insbesondere auf das jeweilige Messgehäuse 2 angepasste Korrekturwerte und/oder von außen bereitgestellte Steuerbefehle, insbesondere Parametrierbefehle aus einem Speicherbereich 16 ausgelesen und berücksichtigt werden.

Zudem erfolgt eine Zwischenspeicherung des Zwischensignals, um eine logische Verknüpfung mit einem zeitlich nachfolgend ermittelten zweiten Zwischensignal zu ermöglichen. Für diese logische Verknüpfung werden in den Verarbeitungsmitteln 15 fest vorgegebene oder frei programmierbare, insbesondere aus dem Speicherbereich 16 ausgelesene Verknüpfungsanweisungen, verarbeitet. Das Ergebnis der logischen Verknüpfung zweier Zwischensignale sowie das aktuelle Zwischensignal werden als digital codierte Ausgangssignale vom Prozessorbereich 15 an einen Busschnittstellenbereich 17 zur Verfügung gestellt. Zumindest das aktuelle Zwischensignal wird als digital codiertes Ausgangssignal mit wenigstens 2 Bit codiert und kann zusammen mit dem Verknüpfungsergebnis vom Busschnittstellenbereich 17 an eine Steuereinrichtung 23 bereitgestellt werden. Das Verknüpfungsergebnis kann als digitales Schaltsignal exemplarisch mit 1 Bit codiert sein.

Exemplarisch ist der Busschnittstellenbereich 17 als Schnittstelle für eine I/O-Link-Verbindung ausgebildet, die als Punkt-zu-Punkt-Verbindung vorgesehen ist. Dabei wird das digital codierte Ausgangssignal über eine Leitung 19 an einen I/O-Link-Master 20 weitergeleitet, der mehrere Anschlüsse 21 für I/O-Link-Geräte wie die Sensoreinrichtung 6 aufweist. Im I/O-Link-Master 20 wird das digitale Ausgangssignal exemplarisch in ein höheres Busprotokoll, beispielsweise ein Profi-Bus-Protokoll, eingebunden und kann dann über eine schematisch dargestellte Busleitung 22 an eine Steuereinrichtung 23 weitergeleitet und dort verarbeitet werden.

Von der Steuereinrichtung 23 können Steuerbefehle, insbesondere Parametrierbefehle, über den I/O-Link-Master 20 und den Busschnittstellenbereich 17 in den Speicherbereich 16 geschrieben werden, die zur Verarbeitung des digital codierten Zwischensignals herangezogen werden können.

Bei dem vom Sensormittel 8 bereitgestellten analogen Sensorsignal handelt es sich, wie oben bereits angegeben, exemplarisch um eine elektrische Spannung. Diese elektrische Spannung ist abhängig vom Magnetfeld des Magnetelements 7 und somit von der relativen Position des Messglieds 3 gegenüber dem Messgehäuse 2 und der daran angebrachten Sensoreinrichtung 6. Das analoge Sensorsignal kann in Abhängigkeit von der Bewegungsrichtung und gegebenenfalls auch in Abhängigkeit von der Bewegungsgeschwindigkeit des Messglieds 3 bei jeweils gleicher Position des Messglieds 3 unterschiedliche Werte annehmen, was insbesondere auf Hystereseeffekte und/oder interne Verarbeitungszeiten und/oder gegebenenfalls auf Unterschiede für den Schaltweg des Sensormittels 8 in Abhängigkeit von der Geometrie des Messgehäuses 2 zurückzuführen ist.

## Patentansprüche

1. Messeinrichtung mit einem Messgehäuse (2) und einem beweglich im Messgehäuse (2) aufgenommenen Messglied (3) sowie mit einer Sensoreinrichtung (6) zur Erfassung einer Position des Messglieds (3) relativ zum Messgehäuse (2), wobei die Sensoreinrichtung (6) wenigstens ein zur Bereitstellung eines analogen Sensorsignals in Abhängigkeit von der Position des Messglieds (3) ausgebildetes Sensormittel (8) sowie Schaltungsmittel (12) zur Analog-Digital-Wandlung des Sensorsignals und Verarbeitungsmittel (15) zur Verarbeitung des Sensorsignals und Buskommunikationsmittel (17) zur bidirektionalen digitalen Datenübertragung zwischen der Sensoreinrichtung (6) und einer Steuereinrichtung (23) umfasst, wobei die Verarbeitungsmittel (15) für eine programmierbare logische Verknüpfung von wenigstens zwei in zeitlicher Abfolge nacheinander ermittelten Beträgen von Sensorsignalen sowie für eine Bereitstellung eines Verknüpfungsergebnisses und des analogen Sensorsignals in digitalisierter Codierung, insbesondere mit einer Codierung, die wenigstens 2 Bit umfasst, an die Buskommunikationsmittel (17) ausgebildet sind und wobei die Verarbeitungsmittel (15) für wenigstens eine programmierbare logische Verknüpfung von Beträgen des analogen Sensorsignals aus der Funktionsgruppe: Schaltpunktkorrektur, Fensterkomparator, Richtungserkennung, Hysteresekomparator, ODER-Verknüpfung, UND-Verknüpfung, Negation, Zählwerk, Signalverlängerung, ausgebildet sind.

2. Messeinrichtung nach Anspruch 1, **dadurch gekennzeichnet, dass** die Verarbeitungsmittel (15) für eine Zwischenspeicherung wenigstens eines Werts des Sensorsignals ausgebildet sind.

3. Messeinrichtung nach Anspruch 1 oder 2, **dadurch gekennzeichnet, dass** die Sensoreinrichtung (6) eine Speicheranordnung (16) umfasst, in der Korrekturwerte, insbesondere Korrekturwerte für eine Sensorhysterese und/oder Korrekturwerte für unterschiedliche Schaltwege bei unterschiedlich ausgebildeten Messgehäusen (2), gespeichert sind, wobei die Korrekturwerte von der Speicheranordnung (16) an die Verarbeitungsmittel (15) bereitstellbar sind, um eine Korrektur des analogen Sensorsignals zu ermöglichen.

4. Messeinrichtung nach Anspruch 3, **dadurch gekennzeichnet, dass** die, insbesondere als I/O-Link-Schnittstelle ausgebildeten, Buskommunikationsmittel (17) für einen Empfang von Steuerbefehlen, insbesondere Parametrierbefehlen, von einer Steuereinrichtung (23) sowie zur Weiterleitung der Steuerbefehle an die Verarbeitungsmittel (15) und/oder an die Speicheranordnung (16) ausgebildet sind.

5. Messeinrichtung nach Anspruch 3 oder 4, **dadurch gekennzeichnet, dass** in der Speicheranordnung (16) Verarbeitungsanweisungen, insbesondere logische Verknüpfungsanweisungen, zur Verarbeitung des analogen Sensorsignals hinterlegt sind, die für eine Anpassung des Verarbeitungsvorgangs für das analoge Sensorsignal in den Verarbeitungsmitteln (15) an diese bereitstellbar sind.

6. Messeinrichtung nach Anspruch 3, 4 oder 5, **dadurch gekennzeichnet, dass** die Speicheranordnung (16) für die Speicherung wenigstens eines programmierbaren, eine relative Position des Messglieds (3) gegenüber dem Messgehäuse (2) kennzeichnenden Positionswerts, der zum Vergleich mit einem aktuellen und/oder mit einem zwischengespeicherten Wert des Sensorsignals in den Verarbeitungsmitteln (15) einsetzbar ist, ausgebildet ist.

7. Messeinrichtung nach einem der Ansprüche 3 bis 6, **dadurch gekennzeichnet, dass** die Schaltungsmittel (12) zur Analog-Digital-Wandlung des Sensorsignals und/oder die Verarbeitungsmittel (15) zur Verarbeitung des Sensorsignals und/oder die Buskommunikationsmittel (17) und/oder die Speicheranordnung (16) in einer Hardware-Funktionseinheit (11), insbesondere in einem Mikrocontroller, zusammengefasst sind.

8. Messeinrichtung nach einem der vorhergehenden Ansprüche, **dadurch gekennzeichnet, dass** die Verarbeitungsmittel (15) für eine Bereitstellung wenigstens eines digitalen Schaltsignals an die Buskommunikationsmittel (17) ausgebildet sind, wobei das digitale Schaltsignal in den Verarbeitungsmitteln (15) anhand des anlogen Sensorsignals und wenigstens einer Verarbeitungsanweisung und/oder eines Korrekturwerts ermittelbar ist.

9. Verfahren zur Erfassung und Verarbeitung einer Position eines Messglieds (3), das beweglich in einem Messgehäuse (2) einer Messeinrichtung (1) aufgenommen ist und dem eine Sensoreinrichtung (6) zugeordnet ist, die wenigstens ein Sensormittel (8) zur Erfassung einer relativen Position des Messglieds (3) gegenüber dem Messgehäuse (2) umfasst, umfassend die Schritte: Bereitstellung eines analogen, von der relativen Position des Messglieds (3) gegenüber dem Messgehäuse (2) abhängigen Sensorsignals durch das Sensormittel (8) an Schaltungsmittel (12), Analog-Digital-Wandlung des analogen Sensorsignals in den Schaltungsmitteln (12), Bereitstellung des digital codierten Sensorsignals an Verarbeitungsmittel (15), Zwischenspeicherung eines Werts des analogen Sensorsignals in den Verarbeitungsmitteln (15), Durchführen einer programmierbaren logischen Verknüpfung des zwischengespeicherten Werts mit einem in zeitlicher Abfolge später ermittelten weiteren Wert des analogen Sensorsignals in den Verarbeitungsmitteln (15), Wandlung des digital codierten Sensorsignals in ein digital codiertes Analogsignal, das wenigstens 2 Bit umfasst, in den Verarbeitungsmitteln (15) und Bereitstellung des digital codierten Analogsignals an Buskommunikationsmittel (17) zur bidirektionalen digitalen Datenübertragung zwischen der Sensoreinrichtung (6) und einer Steuereinrichtung (23), wobei in den Verarbeitungsmitteln (15) unter Einbeziehung des zwischengespeicherten Sensorsignals und des in zeitlicher Abfolge später ermittelten weiteren Signalwerts wenigstens eine programmierbare logische Verknüpfung aus der Funktionsgruppe: Fensterkomparator, Hysteresekomparator, ODER-Verknüpfung, UND-Verknüpfung, Negation, Zählwerk, Richtungserkennung, Signalverlängerung, ermittelt wird.

10. Verfahren nach Anspruch 9, **dadurch gekennzeichnet, dass** den Verarbeitungsmitteln Korrekturwerte aus einer Speicheranordnung (16) bereitgestellt werden, um eine zumindest teilweise Kompensation von Hystereseeigenschaften der Sensormittel (8) und/oder von unterschiedlichen Schaltwegen der Sensoranordnung aufgrund unterschiedlich ausgebildeten Messgehäusen (2) zu ermöglichen, wobei die Korrekturwerte aus einer Speicheranordnung (16) ausgelesen werden.

11. Verfahren nach Anspruch 9 oder 10, **dadurch gekennzeichnet, dass** in den Verarbeitungsmitteln (15) ein Vergleich des aktuellen Sensorsignals und/oder des zwischengespeicherten Sensorsignals mit wenigstens einem in der Speicheranordnung gespeicherten, eine relative Position des Messglieds (3) gegenüber dem Messgehäuse (2) kennzeichnenden Positionswerts, vorgenommen wird.

## Claims

1. Measuring device having a measuring housing (2) and a measuring element (3) movably accommodated in the measuring housing (2), and having a sensor device (6) for detecting a position of the measuring element (3) relative to the measuring housing (2), the sensor device (6) comprising at least one sensor means (8) designed to provide an analog sensor signal as a function of the position of the measuring element (3), as well as circuit means (12) for analog-to-digital conversion of the sensor signal and processing means (15) for processing the sensor signal and bus communication means (17) for bidirectional digital data transmission between the sensor device (6) and a control device (23), wherein the processing means (15) are designed for a programmable logic combination of at least two absolute values of sensor signals determined successively in chronological sequence and for a provision of a combination result and of the analog sensor signal in digitized coding, in particular with a coding comprising at least 2 bits, to the bus communication means (17), and wherein the processing means (15) are designed for at least one programmable logic combination of absolute values of the analog sensor signal from the group: switching point correction, window comparator, direction recognition, hysteresis comparator, OR operation, AND operation, negation, counter, signal extension.

2. Measuring device according to claim 1, **characterized in that** the processing means (15) are designed for intermediate storage of at least one value of the sensor signal.

3. Measuring device according to claim 1 or 2, **characterised in that** the sensor device (6) comprises a memory arrangement (16) in which correction values, in particular correction values for a sensor hysteresis and/or correction values for different switching paths in differently constructed measuring housings (2), are stored, wherein the correction values can be made available from the memory arrangement (16) to the processing means (15) in order to enable a correction of the analogue sensor signal.

4. Measuring device according to claim 3, **characterized in that** the bus communication means (17), in particular designed as an I/O link interface, are designed for receiving control commands, in particular parameterizing commands, from a control device (23) and for forwarding the control commands to the processing means (15) and/or to the memory arrangement (16) .

5. Measuring device according to claim 3 or 4, **characterized in that** processing instructions, in particular logical combination instructions, for processing the analog sensor signal are stored in the memory arrangement (16), which processing instructions can be provided for adapting the processing procedure for the analog sensor signal in the processing means (15) to the latter.

6. Measuring device according to claim 3, 4 or 5, **characterized in that** the memory arrangement (16) is designed for storing at least one programmable position value which characterizes a relative position of the measuring element (3) with respect to the measuring housing (2) and which can be provided to the processing means (15) for comparison with a current and/or with an intermediately stored value of the sensor signal.

7. Measuring device according to one of claims 3 to 6, **characterized in that** the circuit means (12) for analog-to-digital conversion of the sensor signal and/or the processing means (15) for processing the sensor signal and/or the bus communication means (17) and/or the memory arrangement (16) are combined in a hardware functional unit (11), in particular in a microcontroller.

8. Measuring device according to one of the preceding claims, **characterized in that** the processing means (15) are designed for providing at least one digital switching signal to the bus communication means (17), wherein the digital switching signal is determinable in the processing means (15) using the analogue sensor signal and at least one processing instruction and/or a correction value.

9. Method for detecting and processing a position of a measuring element (3) which is movably accommodated in a measuring housing (2) of a measuring device (1) and to which a sensor device (6) is assigned, which comprises at least one sensor means (8) for detecting a relative position of the measuring element (3) with respect to the measuring housing (2), **characterized by** the steps: provision of an analog sensor signal which is dependent on the relative position of the measuring element (3) with respect to the measuring housing (2) by the sensor means (8) to circuit means (12), analog-digital conversion of the analog sensor signal in the circuit means (12), provision of the digitally coded sensor signal to processing means (15), intermediate storage of a value of the analog sensor signal in the processing means (15), carrying out a programmable logical combination of the intermediate stored value with a further value of the analog sensor signal determined later in chronological order in the processing means (15), conversion of the digitally coded sensor signal into a digitally coded analogue signal, which comprises at least 2 bits, in the processing means (15) and provision of the digitally coded analogue signal to bus communication means (17) for bidirectional digital data transmission between the sensor device (6) and a control device (23), wherein the processing means (15) process at least one programable logic operation from the functional group: window comparator, hysteresis comparator, OR operation, AND operation, negation, counter, direction recognition, signal extension, taking into account the current and/or the temporarily stored sensor signal.

10. Method according to claim 9, **characterized in that** correction values are provided to the processing means from a memory arrangement (16) in order to enable at least partial compensation of hysteresis properties of the sensor means (8) and/or of different switching paths of the sensor arrangement on the basis of differently formed measuring housings (2), the correction values being read out from a memory arrangement (16) .

11. Method according to claim 9 or 10, **characterized in that** a comparison of the current sensor signal and/or the temporarily stored sensor signal with at least one position value stored in the memory arrangement and identifying a relative position of the measuring element (3) with respect to the measuring housing (2) is carried out in the processing means (15).

## Revendications

1. Dispositif de mesure avec un boîtier de mesure (2) et un élément de mesure (3) reçu de manière mobile dans le boîtier de mesure (2) ainsi qu'avec un dispositif capteur (6) pour l'établissement d'une position de l'élément de mesure (3) par rapport au boîtier de mesure (2), dans lequel le dispositif capteur (6) comprend au moins un moyen capteur (8) réalisé pour la mise à disposition d'un signal de capteur analogique en fonction de la position de l'élément de mesure (3) ainsi que des moyens de commutation (12) pour la conversion analogique-numérique du signal de capteur et des moyens de traitement (15) pour le traitement du signal de capteur et des moyens de communication bus (17) pour la transmission de données numérique bidirectionnelle entre le dispositif capteur (6) et un dispositif de commande (23), dans lequel les moyens de traitement (15) sont réalisés pour une combinaison logique programmable d'au moins deux valeurs déterminées l'une après l'autre dans l'ordre chronologique de signaux de capteur ainsi que pour une mise à disposition d'un résultat de combinaison et du signal de capteur analogique en codage numérisé, en particulier avec un codage qui comprend au moins 2 bits, aux moyens de communication bus (17) et dans lequel les moyens de traitement (15) sont réalisés pour au moins une combinaison logique programmable de valeurs du signal de capteur analogique à partir du groupe de fonction : correction de point de commutation, comparateur de fenêtre, détection de direction, comparateur d'hystérésis, combinaison OU, combinaison ET, négation, compteur, prolongement de signal.

2. Dispositif de mesure selon la revendication 1, **caractérisé en ce que** les moyens de traitement (15) sont réalisés pour un enregistrement temporaire d'au moins une valeur du signal de capteur.

3. Dispositif de mesure selon la revendication 1 ou 2, **caractérisé en ce que** le dispositif capteur (6) comprend un ensemble mémoire (16), dans lequel des valeurs de correction, en particulier des valeurs de correction pour une hystérésis de capteur et/ou des valeurs de correction pour différentes courses pour des boîtiers de mesure (2) réalisés différemment, sont enregistrées dans lequel les valeurs de correction peuvent être mises à disposition par l'ensemble mémoire (16) aux moyens de traitement (15) pour permettre une correction du signal de capteur analogique.

4. Dispositif de mesure selon la revendication 3, **caractérisé en ce que** les moyens de communication bus (17), réalisés en particulier en tant qu'interface de liaison I/O, sont réalisés pour une réception d'ordres de commande, en particulier d'ordres de paramétrage, d'un dispositif de commande (23) ainsi que pour le transfert des ordres de commande aux moyens de traitement (15) et/ou à l'ensemble mémoire (16).

5. Dispositif de mesure selon la revendication 3 ou 4, **caractérisé en ce que** des instructions de traitement, en particulier des instructions de combinaison logiques, pour le traitement du signal de capteur analogique, qui peuvent être mises à disposition des moyens de traitement (15) pour une adaptation de l'opération de traitement pour le signal de capteur analogique dans ceux-ci, sont stockées dans l'ensemble mémoire (16).

6. Dispositif de mesure selon la revendication 3, 4 ou 5, **caractérisé en ce que** l'ensemble mémoire (16) est réalisé pour l'enregistrement d'au moins une valeur de position programmable, caractérisant une position relative de l'élément de mesure (3) par rapport au boîtier de mesure (2), qui est utilisable pour la comparaison avec une valeur actuelle et/ou enregistrée temporairement du signal de capteur dans les moyens de traitement (15).

7. Dispositif de mesure selon l'une quelconque des revendications 3 à 6, **caractérisé en ce que** les moyens de commutation (12) pour la conversion analogique-numérique du signal de capteur et/ou les moyens de traitement (15) pour le traitement du signal de capteur et/ou les moyens de communication bus (17) et/ou l'ensemble mémoire (16) sont regroupés dans une unité fonctionnelle matérielle (11), en particulier dans un microcontrôleur.

8. Dispositif de mesure selon l'une quelconque des revendications précédentes, **caractérisé en ce que** les moyens de traitement (15) sont réalisés pour une mise à disposition d'au moins un signal de commutation numérique aux moyens de communication bus (17), dans lequel le signal de commutation numérique peut être déterminé dans les moyens de traitement (15) à l'aide du signal de capteur analogique et d'au moins une instruction de traitement et/ou d'une valeur de correction.

9. Procédé d'établissement et de traitement d'une position d'un élément de mesure (3), qui est reçu de manière mobile dans un boîtier de mesure (2) d'un dispositif de mesure (1) et auquel un dispositif capteur (6) est associé, qui comprend au moins un moyen capteur (8) pour l'établissement d'une position relative de l'élément de mesure (3) par rapport au boîtier de mesure (2), comprenant les étapes de : mise à disposition d'un signal de capteur analogique, dépendant de la position relative de l'élément de mesure (3) par rapport au boîtier de mesure (2) par le moyen capteur (8) à des moyens de commutation (12), conversion analogique-numérique du signal de capteur analogique dans les moyens de commutation (12), mise à disposition du signal de capteur codé numériquement à des moyens de traitement (15), enregistrement temporaire d'une valeur du signal de capteur analogique dans les moyens de traitement (15), réalisation d'une combinaison logique programmable de la valeur enregistrée temporairement avec une autre valeur déterminée plus tard dans l'ordre chronologique du signal de capteur analogique dans les moyens de traitement (15), conversion du signal de capteur codé numériquement en un signal analogique codé numériquement qui comprend 2 bits, dans les moyens de traitement (15) et mise à disposition du signal analogique codé numériquement à des moyens de communication bus (17) pour la transmission de données numérique bidirectionnelle entre le dispositif capteur (6) et un dispositif de commande (23), dans lequel au moins une combinaison logique programmable est déterminée dans les moyens de traitement (15) en tenant compte du signal de capteur enregistré temporairement et de l'autre valeur de signal déterminée plus tard dans l'ordre chronologique à partir du groupe de fonction : comparateur de fenêtre, comparateur d'hystérésis, combinaison OU, combinaison ET, négation, compteur, détection de direction, prolongement de signal.

10. Procédé selon la revendication 9, **caractérisé en ce que** des valeurs de correction sont mises à disposition des moyens de traitement à partir d'un ensemble mémoire (16) pour permettre une compensation au moins partielle de propriétés d'hystérésis des moyens de capteur (8) et/ou de différentes courses de l'ensemble capteur en raison de boîtiers de mesure (2) réalisés différemment, dans lequel les valeurs de correction sont lues à partir d'un ensemble mémoire (16).

11. Procédé selon la revendication 9 ou 10, **caractérisé en ce qu'**une comparaison du signal de capteur actuel et/ou du signal de capteur enregistré temporairement est effectuée dans les moyens de traitement (15) avec au moins une valeur de position enregistrée dans l'ensemble mémoire, caractérisant une position relative de l'élément de mesure (3) par rapport au boîtier de mesure (2).
